Europäisches Patentamt

European Patent Office

Office européen des brevets

(11) Veröffentlichungsnummer: **0 176 919 B1**

(19)

(12) **EUROPÄISCHE PATENTSCHRIFT**

(45) Veröffentlichungstag der Patentschrift: **08.01.92**

(21) Anmeldenummer: **85112059.2**

(22) Anmeldetag: **24.09.85**

(51) Int. Cl.5: **C01G 9/00, C01G 3/00, C01G 45/00, C01G 49/00, C01G 51/00, C01G 53/00, C08K 3/22, G11B 5/706, C09C 1/00, H01F 1/37, H01F 1/117**

(54) **Verfahren zur Herstellung von feinteiligem isotropen Ferritpulver mit Spinellstruktur.**

(30) Priorität: **28.09.84 DE 3435698**

(43) Veröffentlichungstag der Anmeldung:
**09.04.86 Patentblatt 86/15**

(45) Bekanntmachung des Hinweises auf die Patenterteilung:
**08.01.92 Patentblatt 92/02**

(84) Benannte Vertragsstaaten:
**DE FR GB NL**

(56) Entgegenhaltungen:
**DE-A- 3 416 988     FR-A- 2 230 590**
**FR-A- 2 261 980     US-A- 3 822 210**
**US-A- 4 289 745     US-A- 4 292 294**
**US-A- 4 425 250     US-A- 4 473 542**
**US-A- 4 486 401**

(73) Patentinhaber: **BASF Aktiengesellschaft**
**Carl-Bosch-Strasse 38**
**W-6700 Ludwigshafen(DE)**

(72) Erfinder: **Hibst, Hartmut, Dr.**
**Sternstrasse 215**
**W-6700 Ludwigshafen(DE)**

MATERIALS RESEARCH BULLETIN, band 20, Nr. 1, Januar 1985, Seiten 85-92, Pergamon Press, US; T. UTSUNOMIYA et al.: "Uniformity of the composition of spinel ferrite particles prepared by air oxidation of hydroxide precursors in suspension"

ZEITSCHRIFT FÜR ANORGANISCHE UND ALLGEMEINE CHEMIE, Band 331, 1964, Seiten 231-233, J.A. BARTH, Leipzig, DD; A. KRAUSE et al.: "Die Herstellung eines wasserfreien Kobalt(II)-ferrits CoFe2O4 auf nassem Wege"

CHEMICAL ABSTRACTS, Band 88, 1978, Seite 602, Nr. 98386v, Columbus, Ohio, US; M. KIYAMA: "The formation of manganese and cobalt ferrites by the air oxidation of aqueous suspensions and their properties", & BULL. CHEM. SOC. JPN. 1978, 51(1), 134-8

CHEMICAL ABSTRACTS, Band 90, 1979, Seite 694, Nr. 196865m, Columbus, Ohio, US, K. KEN et al.: "The formation of magnesium-bearing ferrite by the air oxidation of aqueous suspensions", & BULL. CHEM. SOC. JPN. 1979, 52(3), 747-52

CHEMICAL ABSTRACTS, Band 94, 1981, Seite 681, Nr. 201881c, Columbus, Ohio, US; M. SCHAEFER et al.: "Studies on the preparation of manganese zinc ferrites powders using sodium hydroxide mixed precipitation", & HERMSDORFER TECH. MITT. 1979, 19(54), 1735-42

CHEMICAL ABSTRACTS, Band 96, 1982, Seite 549, Nr. 14529y, Columbus, Ohio, US; I. KAZUO et al.: "Formation of aluminum-bearing ferrite in aqueous suspension by air oxidation", & J. CHEM. SOC. DALTON TRANS. 1981, (11), 2217-19

CHEMICAL ABSTRACTS, Band 98, 1983, Seiten 714-715, Nr. 226818h, Columbus, Ohio, US; E.V. PASHKOVA et al.: "Phase transformations during heat treatment of manganese, cobalt, and iron hydroxides", & UKR. KHIM. ZH. 1983, 49(4), 355-9

## Beschreibung

Die Erfindung betrifft ein Verfahren zur Herstellung von feinteiligen Ferritpulvern mit Spinellstruktur der allgemeinen Formel

$$M(II)_x Fe(II)_{1-x} Fe(III)_2 O_4$$

und

$$M(II)_x Fe(III)_{3-x} O_{4,5-0,5x}$$

mit M = Mg, Mn, Co, Ni, Cu und/oder Zn und mit Werten fur x von Null bis Eins, mit im wesentlichen isotroper Teilchenform.

Fur die Herstellung von lasierenden schwarzen bzw. orange- bis gelbfarbenen Einfärbungen von Kunststoffen oder von anderen organischen Bindemitteln zur Herstellung farbiger Lackierungen werden $Fe_3O_4$- bzw. $Zn_x Fe_{3-x} O_{4,5-0,5x}$-Pigmente mit einer definiert einstellbaren, hohen spezifischen BET-Oberfläche benötigt. Ist die BET-Oberfläche der Pigmente zu niedrig, so resultieren keine lasierenden, sondern deckende Einfärbungen. Ist sie zu hoch, so wird u.a. die Dispergierfähigkeit der Pigmente verschlechtert. Weiterhin sind zur Darstellung von magnetischen Flüssigkeiten $Fe_3O_4$- bzw. $Zn_x Fe_{3-x} O_4$-Pigmente mit einer definiert einstellbaren, hohen spezifischen BET-Oberfläche wünschenswert. Ist die BET-Oberfläche der magnetischen Teilchen zu niedrig, so agglomerieren die Partikel und flocken aus, wobei die magnetische Flüssigkeit ihre superparamagnetische Eigenschaft verliert. Eine extrem hohe spezifische Pigmentoberfläche wirkt sich dagegen nachteilig auf die Sättigungsmagnetisierung der Pigmente und damit auch der magnetischen Flüssigkeit aus, da bekanntermaßen mit zunehmender Pigmentfeinteiligkeit der unmagnetische Anteil der Pigmentoberfläche zunimmt. In entsprechender Weise werden für die Herstellung von farbigen magnetischen Flüssigkeiten und Tinten überfärbbare ($\gamma$-$Fe_2O_3$)- bzw. $Zn_x Fe_{3-x} O_{4,5-0,5x}$-Pigmente mit einer definiert einstellbaren, hohen, aber nicht extrem hohen BET-Oberfläche benötigt. Weiterhin sind zur Herstellung von Magnetköpfen polykristalline, hochdichte und weichmagnetische MnZn- oder NiZn-Ferritkeramiken erforderlich. Das kopfabhängige Rauschen und die Permeabilität solcher, z.B. heißgepreßter Magnetköpfe nimmt mit abnehmender Gefugefeinheit zu. Weiterhin hat es sich gezeigt, daß die mechanische Stabilität der Ferritkeramik bei der Verarbeitung zu Magnetköpfen mit schmalen Aufzeichnungsspuren mit zunehmender Kornfeinheit verbessert wird. Zur Herstellung der genannten feinkörnigen Ferritkeramiken sind damit entsprechend feinteilige MnZn- bzw. NiZn-Ferritpigmente mit einer definiert einstellbaren Teilchengröße erforderlich. Eine zu hohe Feinteiligkeit der Ausgangsferritpigmente kann dagegen aufgrund deren ungleichmäßiger Verdichtbarkeit beim Versintern eine unerwünscht hohe Porosität der Ferritkeramik zur Folge haben.

Ferritpulver mit Spinellstruktur der allgemeinen Formel $M(II)_x Fe(II)_{1-x} Fe(III)_2 O_4$ mit M = Mg, Mn, Co, Ni, Cu und/oder Zn und mit $0 \leq x \leq 1$ können auf naßchemischem Wege nach zwei verschiedenen Verfahren hergestellt werden.

Beim Neutralisationsverfahren wird von einer Mischfällung mit einem pH-Wert von 11 - 13 ausgegangen. Die Mischfällung wird durch Zusammengeben einer wäßrigen Alkalihydroxidlösung, einer M(II)-Salzlösung und einer Fe(III)-Salzlösung hergestellt (für x = 1 entfällt die Zugabe der Fe(II)-Salzlösung). Anschließend wird die Mischfällung ohne Einleiten eines oxidierenden Gases erhitzt. Oft wird das Erhitzen der Mischfällung sogar unter einem nichtoxidierenden Schutzgas, z.B. Stickstoff oder Argon durchgeführt. Dabei fällt ein extrem feinteiliges Ferritpulver der Zusammensetzung $M_x Fe_{3-x} O_4$ [ = $M(II)_x Fe(II)_{1-x} Fe(III)_2 O_4$] ($0 \leq x \leq 1$) mit isotroper Teilchenform an. Das Neutralisationsverfahren ist dadurch gekennzeichnet, daß das Verhältnis der Eisen(III)-Ionen zu der Summe der M(II)- und Eisen(II)-Ionen in der Mischfällung dasselbe ist, wie im erhaltenen Ferrit der Zusammensetzung $M_x Fe_{3-x} O_4$. Damit bleibt das [Fe(III)/(M(II) + Fe(II))]-Verhältnis während der Reaktion konstant, so daß es sich bei der Ferritbildungsreaktion um keine Redoxreaktion handelt. Die anfallenden Ferritpulver sind extrem feinteilig und besitzen, abhängig von den Reaktionsbedingungen, Teilchendurchmesser von etwa 50 bis 200 Å; die spezifischen BET-Oberflächen der Pigmente liegen zwischen 70 und 300 m²/g. Diese kolloidal anfallenden Pigmente lassen sich aufgrund ihrer extrem hohen Feinteiligkeit durch einen Filtrationsprozeß nur schwierig abtrennen. Darüberhinaus ist das Auswaschen der Filterkuchen sehr langwierig. Hinzu kommt, daß sich beim Trocknen der Fällungspulver außerordentlich harte Massen bilden. Durch Pulverisieren ist es unmöglich, aus diesen harten Massen Ferritpulver mit guter Dispergierbarkeit herzustellen. Zum anderen besitzen die nach dem Neutralisationsverfahren hergestellten extrem feinteiligen magnetischen Pigmente im allgemeinen in nachteiliger Weise eine niedrigere Sättigungsmagnetisierung als grobteilige Pigmente mit der gleichen Zusammensetzung. Dies ist eine Folge des hohen unmagnetischen Pigmentoberflächenanteils. Weiterhin zeigen die nach dem Neutralisationsverfahren hergestellten extrem feinteiligen Ferritpigmente der Zusammensetzung $M_x Fe_{3-x} O_4$ nach einer z.B. bei 300°C durchgeführten trockenen Oxidation mit einem sauerstoffhaltigen Gas zu Ferritpulvern der Zusammensetzung $M_x Fe_{3-x} O_{4,5-0,5x}$ eine an einer starken Abnahme der BET-Oberflächenwerte erkennbare Versinterung der extrem feinen Teilchen. Diese Versinterung bringt eine zusätzliche Verschlechterung der Dispergierfähigkeit mit sich. Weiterhin hat die extrem hohe Feinteiligkeit so hergestellter Ferritpulver i.a. eine ungleichmäßige Verdichtbarkeit beim Kalt- oder Heißverpressen zur Folge, wobei eine Ferritkeramik mit unerwünscht hoher Porosität erhalten wird.

Bei dem zweiten Verfahren, dem sogenannten Oxidationsverfahren, wird von einer Mischfällung ausgegangen, die durch Zusammengeben einer wäßrigen Alkalihydroxidlösung, einer M(II)-Salzlösung und einer Fe(II)-Salzlösung hergestelltwird. Die Mischfällung wird aufgeheizt und mit einem oxidierenden Gas, i.a. mit Luft, solange oxidiert, bis ein Ferritpulver der Zusammensetzung $M_xFe_{3-x}O_4$ - [= $M(II)_xFe(II)_{1-x}Fe(III)_2O_4$] ($0 \leq x \leq 1$) mit isotroper Teilchenform anfällt. Das Oxidationsverfahren ist dadurch gekennzeichnet, daß von einer Fe(III)-freien Mischfällung ausgegangen wird. Bei der Oxidationsreaktion wird ein Teil des Fe(II) der Mischfällung zum Fe(III)-Anteil des anfallenden Ferritpulvers oxidiert. Dabei wird der Ausgangs-pH der Mischfällung zu kleineren Werten, d.h. ins Saure verschoben, wenn nicht während der Reaktion ständig Alkalihydroxidlösung zugegeben wird. Es ist bekannt (US-PS 3 822 210), daß die Feinteiligkeit der nach dem Oxidationsverfahren erhaltenen Ferritpulver durch geeignete Wahl der Reaktionsparameter wie pH-Wert und Reaktionstemperatur in begrenztem Umfang variiert werden kann. Außerdem liegt unter bestimmten Reaktionsbedingungen ein Einfluß der M(II)-Konzentration x auf die erhaltene Pigmentfeinteiligkeit vor. Es hat sich jedoch gezeigt, daß es nach dem Oxidationsverfahren äußerst schwierig ist, M(II)-haltige Magnetitpulver bzw. M-(II)-Ferrite mit einem Teilchendurchmesser von kleiner 0,15 μm und einer spezifischen BET-Oberfläche von größer 12 m²/g herzustellen. Beim Einsatz technischer Eisen(II)-Chloridlösungen ergeben sich besondere Probleme zur Erzielung einer hohen Pigmentfeinteiligkeit. Ein besonderer Nachteil der nach dem Oxidationsverfahren erzielbaren unzureichenden Pigmentfeinteiligkeit ergibt sich in der geringen Lasierfähigkeit der erhaltenen Farbpigmente. Darüberhinaus reicht die erzielbare Pigmentfeinteiligkeit nicht aus, um eine stabile magnetische Flüssigkeit oder Tinte herzustellen. Weiterhin ist es für die Herstellung spezieller hochpermeabler und rauscharmer Ferritkeramiken wünschenswert, von Ferritausgangspulvern mit höherer Feinteiligkeit auszugehen.

Aufgabe der vorliegenden Erfindung war es daher, ein Herstellungsverfahren bereitzustellen, das es auf kostengünstige Weise erlaubt, isotrope $M_xFe_{3-x}O_4$-Ferrite [= $M(II)_xFe(II)_{1-x}Fe(III)_2O_4$] mit M = Mg, Mn, Co, Ni, Cu und/oder Zn und mit $0 \leq x \leq$ 1 mit einer definiert einstellbaren Feinteiligkeit zu gewinnen, die unterhalb der nach dem Neutralisationsverfahren zugänglichen, extrem hohen Feinteiligkeit und oberhalb der nach dem Oxidationsverfahren zugänglichen, vergleichsweise geringen Pigmentfeinteiligkeit liegt. Weiterhin war es Aufgabe der vorliegenden Erfindung, ein Herstellungsverfahren bereitzustellen, das es erlaubt, auf kostengünstige Weise isotrope $M_xFe_{3-x}O_{4,5-0,5x}$-Ferrite [ = M-$(II)_xFe(III)_{3-x}O_{4,5-0,5x}$] mit M = Mg, Mn, Co, Ni, Cu und/oder Zn und mit $0 \leq x \leq 1$ mit einer definiert einstellbaren Feinteiligkeit zu gewinnen, die im wesentlichen der Feinteiligkeit der zuvor genannten $M_xFe_{3-x}O_4$-Pigmente entspricht.

Es wurde nun gefunden, daß sich feinteilige Ferritpulver der allgemeinen Formel $M_xFe_{3-x}O_4$ [ = $M(II)_xFe(II)_{1-x}Fe(III)_2O_4$] mit M = Mg, Mn, Co, Ni, Cu und/oder Zn und mit $0 \leq x \leq 1$ mit im wesentlichen isotroper Teilchenform und mit der gewünschten Feinteiligkeit aufgabengemäß herstellen lassen, wenn ein sauerstoffhaltiges Gas in eine Mischfällung, hergestellt aus einer wäßrigen Alkalihydroxid-, einer M(II)-Salz-, einer Eisen(II)-Salz- und einer Eisen(III)-Salzlösung, eingeleitet wird, wobei das Verhältnis der Eisen(III)-Ionen zur Summe der M(II)- und Fe(II)-Ionen in der Ausgangsmischfällung kleiner ist als im resultierenden Ferritpulver der Zusammensetzung $M_xFe_{3-4}O_4$.

Weiterhin wurde gefunden, daß sich feinteilige Ferritpulver der allgemeinen Formel $M_xFe_{3-x}O_{4,5-0,5x}$ [ = $M(II)_xFe(III)_{3-x}O_{4,5-0,5x}$] mit M = Mg, Mn, Co, Ni, Cu und/oder Zn und mit $0 \leq x \leq 1$ mit im wesentlichen isotroper Teilchenform und mit der gewünschten Feinteiligkeit erhalten lassen, wenn Ferritpulver der Zusammensetzung $M_xFe_{3-x}O_4$ mit den gleichen Ionen für M und mit den gleichen Grenzen für x, hergestellt durch Einleiten eines sauerstoffhaltigen Gases in eine Mischfällung, die aus einer wäßrigen Alkalihydroxid-, einer M(II)-Salz-, einer Eisen(II)-Salz- und einer Eisen(III)-Salzlösung erzeugt wird, wobei das Verhältnis der Eisen(III)-Ionen zur Summe der M(II)- und Fe(II)-Ionen in der Ausgangsmischfällung kleiner ist als im resultierenden Ferritpulver der Zusammensetzung $M_xFe_{3-x}O_4$, mit sauerstoffhaltigen Gasen bei 100 bis 500° C oxidiert werden.

Das erfindungsgemäße Verfahren zur Herstellung von Ferritpulvern der allgemeinen Formel $M_xFe_{3-x}O_4$ unterscheidet sich von Neutralisationsverfahren dadurch, daß das [Fe(III)/(M(II) + Fe(II))]-Verhältnis in der Ausgangsmischfällung nicht wie beim Neutralisationsverfahren dem [Fe(III)/(M(II) + Fe(II))]-Verhältnis im erhaltenen Ferritpulver entspricht. Beim erfindungsgemäßen Verfahren ist das [Fe(III)/(M(II) + Fe(II))]-Verhältnis in der Ausgangsmischfällung immer kleiner als im erhaltenen Ferritpulver der Zusammensetzung $M_xFe_{3-x}O_4$ ($0 \leq x \leq$ 1). Außerdem ist das erfindungsgemäße Verfahren mit der chemischen Umsetzung von gasförmigem Sauerstoff über eine Redoxreaktion verknüpft, während das Neutralisationsverfahren unter Schutzgas und damit unter Ausschluß von oxidierenden Gasen durchgeführt wird. Da nach dem erfindungsgemäßen Verfahren grobteiligere Pigmente erhalten werden als nach dem Neutralisationsverfahren, treten beim erfindungsgemäßen Verfahren keine Filtrations- und Auswaschprobleme wie beim Neutralisationsverfahren auf.

Vom Oxidationsverfahren unterscheidet sich das erfindungsgemäße Verfahren zur Herstellung von Ferritpulvern der allgemeinen Formel $M_xFe_{3-x}O_4$ dadurch, daß beim Oxidationsverfahren von einer Alkalihydroxid-, M(II)-salz- und Fe(II)-salzhaltigen Mischfällung ohne Fe(III)-Salzanteil ausgegangen wird, während dem erfindungsgemäßen Verfahren eine Eisen(III)-salzhaltige Mischfällung zugrunde liegt. Bei der Durchführung des erfindungsgemäßen Verfahrens hat es sich überraschenderweise gezeigt, daß mit steigendem Fe(III)-Anteil in der Mischfällung die Feinteiligkeit des erhaltenen Ferritpulvers mit der Zusammensetzung $M_xFe_{3-x}O_4$ mit M = Mg, Mn, Co, Ni, Cu und/oder Zn und mit $0 \leq x \leq 1$ und damit auch die Feinteiligkeit des nach der trockenen Oxidation anfallenden Ferrits mit der Zusammensetzung $M_xFe_{3-x}O_{4,5-0,5x}$ mit den gleichen Ionen für M und den gleichen Grenzen für x zunimmt. Mit zunehmendem Fe(III)-Anteil in der Mischfällung sinkt der Partikeldurchmesser von etwa 0,15 $\mu$m auf etwa 0,02 $\mu$m. Die entsprechenden Pigmente weisen spezifische BET-Oberflächen von etwa 12 bis ca. 100 m²/g auf. Damit lassen sich nach dem erfindungsgemäßen Verfahren deutlich feinteiligere Pigmente herstellen, als dies nach dem Oxidationsverfahren möglich ist. Andererseits ermöglicht das erfindungsgemäße Verfahren die Herstellung grobteiligerer Pigmente, als dies das Neutralisationsverfahren zuläßt.

Die erfindungsgemäß hergestellten isotropen Pigmente der Zusammensetzung $M_xFe_{3-x}O_4$ und der Zusammensetzung $M_xFe_{3-x}O_{4,5-0,5x}$ mit M = Mg, Mn, Co, Ni, Cu und/oder Zn und mit $0 \leq x \leq 1$ unterscheiden sich bei konstantem M/Fe-Verhältnis überraschenderweise deutlich von den bekannten, nach dem Neutralisationsverfahren erhaltenen isotropen Ferriten durch ihre bessere Dispergierbarkeit, ihre besseren ferrimagnetischen Eigenschaften, insbesondere durch ihre höhere Sättigungsmagnetisierung, und durch ihre bessere Verdichtbarkeit beim Kalt- oder Heißpressen. Von den bekannten, nach dem Oxidationsverfahren erhaltenen Ferritpulvern unterscheiden sich die erfindungsgemäß hergestellten Pigmente durch ihre höhere Feinteiligkeit und engere Teilchengrößenverteilung. Diese Verbesserungen im Ferritpulver machen sich auch sehr deutlich bei der Verwendung als lasierende Farbpigmente, bei der Verwendung zur Herstellung magnetischer Flüssigkeiten und Tinten, bei der Verwendung zur Herstellung hochpermeabler weichmagnetischer Ferritkeramiken bemerkbar und bei der Verwendung zur Herstellung von kunststoffgebundenen Ferriten, sogenannten Plastoferriten bemerkbar.

Der Gegenstand der Erfindung wird anhand folgender Beispiele erläutert. Die Beispiele 1 und 5 zeigen die Darstellung von zinkhaltigen Eisenoxiden nach dem bekannten Oxidationsverfahren. Die Beispiele 4 und 8 zeigen die Darstellung von zinkhaltigen Eisenoxiden nach dem bekannten Neutralisationsverfahren. In den Beispielen 2, 3, 6 und 7 wird die Darstellung von zinkhaltigen Eisenoxiden nach dem erfindungsgemäßen Verfahren erläutert.

## Beispiel 1

In einem 5 l-Rührgefäß wurde eine Lösung von 27,26 g $ZnCl_2$ in 2 l $H_2O$ unter Rühren und unter Einleiten von reinem Stickstoff (200 l/h) mit 1057 ml einer technischen Eisen(II)-Chloridlösung der Konzentration 33,59 g $FeCl_2$/100 ml vermischt. Die erhaltene Lösung wurde mit wäßriger NaOH-Lösung und mit $H_2O$ versetzt, bis ein pH von 7,5 und ein Gesamtvolumen von 4 l vorliegt. Anschließend wurde die Mischfällung auf 90° C aufgeheizt. Danach wurde der Stickstoffstrom abgestellt und stattdessen Luft (200 l/h) in die Mischfällung eingeleitet. Der pH-Wert der Reaktionsmischung wurde durch kontinuierliche Zugabe einer 2,5-molaren Natronlauge auf den eingestellten Wert von 7,5 konstant gehalten. Es wurde solange Luft eingeleitet, bis der Fe(II)-Gehalt der Reaktionsmischung konstant blieb. Die Reaktionszeit betrug etwa 5 Stunden. Nach Abkühlen der Dispersion wurde das angefallene Ferritpulver abfiltriert, ausgewaschen und getrocknet.

Am erhaltenen isotropen zinkhaltigen Eisenoxid der Zusammensetzung $Zn_{0,2}Fe_{2,8}O_4$ wurden folgende Pigmenteigenschaften gemessen: $H_c$ = 11 kA/m, $M_{r/\rho}$ = 17 nTm³/g, $M_{s/\rho}$ = 99 nTm³/9, $S_{N2}$ - (spez. BET-Oberfläche) = 12 m²/g.

Anschließend wurde der erhaltene zinkhaltige Magnetit der Zusammensetzung $Zn_{0,2}Fe_{2,8}O_4$ eine Stunde lang bei 300° C mit Luft (200 l/h) in einem drehenden Quarzkolben oxidiert. Am erhaltenen isotropen zinkhaltigen Eisen(III)-Oxid der Zusammensetzung $Zn_{0,2}Fe_{2,8}O_{4,4}$ wurden folgende Pigmenteigenschaften gemessen: $H_c$ = 9 kA/m, $M_{r/\rho}$ = 23 nTm³/g, $H_{s/\rho}$ = 90 nTm³/g, $S_{N2}$ (spez. BET-Oberfläche) = 11,5 m²/g.

## Beispiel 2

In einem 5 l-Rührgefäß wurde eine Lösung von 27,26 g $ZnCl_2$ unter Rühren und unter Einleitung von reinem Stickstoff (200 l/h) mit 553,8 ml einer technischen Eisen(II)-Chloridlösung der Konzentration 41,20 g $FeCl_2$/100 ml und mit 283,7 ml einer technischen Eisen(III)-Chloridlösung der Konzentration 57,18 g $FeCl_3$/100 ml vermischt. Die erhaltene Lösung wurde wie in Beispiel 1 beschrieben, weiterbehandelt. Die Reaktionszeit betrug etwa 4 Stunden.

Am erhaltenen isotropen zinkhaltigen Magnetit der Zusammensetzung $Zn_{0,2}Fe_{2,8}O_4$ wurden folgende Pigmenteigenschaften gemessen: $H_c$ = 9 kA/m, $M_{r/\rho}$ = 28 n$Tm^3$/g, $M_{s/\rho}$ = 106 n$Tm^3$/g, $S_{N2}$ (spez. BET-Oberfläche) = 20,3 $m^2$/g.

Das nach der anschließenden in Beispiel 1 beschriebenen trockenen Oxidation erhaltene zinkhaltige Eisen(III)-Oxid der Zusammensetzung $Zn_{0,2}Fe_{2,8}O_{4,4}$ wies folgende Pigmenteigenschaften auf: $H_c$ = 8 kA/m, $M_{r/\rho}$ = 24 n$Tm^3$/g, $M_{s/\rho}$ = 81 n$Tm^3$/g, $S_{N2}$ (spez. BET-Oberfläche) = 19,2 $m^2$/g.

## Beispiel 3

In einem 5 l-Rührgefäß wurde eine Lösung von 27,26 g $ZnCl_2$ unter Rühren und unter Einleiten von reinem Stickstoff (200 l/h) mit 430,7 ml einer technischen Eisen(II)-Chloridlösung der Konzentration 41,20 g $FeCl_2$/100 ml und mit 397,2 ml einer technischen Eisen(III)-Chloridlösung der Konzentration 57,18 g $FeCl_3$/100 ml vermischt. Die erhaltene Lösung wurde wie in Beispiel 1 beschrieben, weiterbehandelt. Die Reaktionszeit betrug etwa 2 Stunden.

Am erhaltenen isotropen zinkhaltigen Magnetit der Zusammensetzung $Zn_{0,2}Fe_{2,8}O_4$ wurden folgende Pigmenteigenschaften gemessen: $H_c$ = 1 kA/m, $M_{r/\rho}$ = 5 n$Tm^3$/g, $M_{s/\rho}$ = 78 n$Tm^3$/g, $S_{N2}$ (spez. BET-Oberfläche) = 56,7 $m^2$/g.

Das nach der anschließenden in Beispiel 1 beschriebenen trockenen Oxidation erhaltene zinkhaltige Eisen(III)-Oxid der Zusammensetzung $Zn_{0,2}Fe_{2,8}O_{4,4}$ wies folgende Pigmenteigenschaften auf: $H_c$ = 0 kA/m, $M_{r/\rho}$ = 6 n$Tm^3$/g, $M_{s/\rho}$ = 66 n$Tm^3$/g, $S_{N2}$ (spez. BET-Oberfläche) = 53,8 $m^2$/g.

## Beispiel 4

In einem 5 l-Rührgefäß wurde eine Lösung von 27,26 g $ZnCl_2$ unter Rühren und unter Einleiten von reinem Stickstoff (200 l/h) mit 252,80 ml einer technischen Eisen(II)-Chloridlösung der Konzentration 40,12 g $FeCl_2$/100 ml und mit 567,38 ml einer technischen Eisen(III)-Chloridlösung der Konzentration 57,18 g $FeCl_3$/100 ml vermischt. Die erhaltene Lösung wurde mit wäßriger NaOH-Lösung und mit $H_2O$ versetzt, bis ein pH von 7,5 und ein Gesamtvolumen von 4 l vorlag. Anschließend wurde die Mischfällung auf 90 °C aufgeheizt. Nach einer Reaktionszeit von 1 Stunde wurde die Dispersion abgekühlt und das anfallende Ferritprodukt abfiltriert, ausgewaschen und getrocknet.

Am erhaltenen isotropen zinkhaltigen Magnetit der Zusammensetzung $Zn_{0,2}Fe_{2,8}O_4$ wurden folgende Pigmenteigenschaften gemessen: $H_c$ = 1 kA/m, $M_{r/\rho}$ = 3 n$Tm^3$/g, $M_{s/\rho}$ = 69 n$Tm^3$/g, $S_{N2}$ (spez. BET-Oberfläche) = 77.5 $m^2$/g.

Das nach der anschließenden in Beispiel 1 beschriebenen trockenen Oxidation erhaltene zinkhaltige Eisen(III)-Oxid der Zusammensetzung $Zn_{0,2}Fe_{2,8}O_{4,4}$ wies folgende Pigmenteigenschaften auf: $H_c$ = 0 kA/m, $M_{r/\rho}$ = 2 n$Tm^3$/g, $M_{r/\rho}$ = 56 n$Tm^3$/g, $S_{N2}$ (spez. BET-Oberfläche) = 72,9 $m^2$/g.

## Beispiel 5

In einem 5 l-Rührgefäß wurde eine Lösung von 54,52 g $ZnCl_2$ unter Rühren und unter Einleiten von reinem Stickstoff (200 l/h) mit 842,12 ml einer technischen Eisen(II)-Chloridlösung der Konzentration 39,14 g $FeCl_2$/100 ml vermischt. Die erhaltene Lösung wurde wie in Beispiel 1 beschrieben, weiterbehandelt. Die Reaktionszeit betrug etwa 5 Stunden.

Am erhaltenen isotropen zinkhaltigen Magnetit der Zusammensetzung $Zn_{0,4}Fe_{2,6}O_4$ wurden folgende Pigmenteigenschaften gemessen: $H_c$ = 10 kA/m, $M_{r/\rho}$ = 13 n$Tm^3$/g, $M_{s/\rho}$ = 110 n$Tm^3$/g, $S_{N2}$ (spez. BET-Oberfläche) = 12,1 $m^2$/g.

Das nach der anschließenden in Beispiel 1 beschriebenen trockenen Oxidation erhaltene zinkhaltige Eisen(III)-Oxid der Zusammensetzung $Zn_{0,4}Fe_{2,6}O_{4,3}$ wies folgende Pigmenteigenschaften auf: $H_c$ = 6 kA/m, $M_{r/\rho}$ = 16 n$Tm^3$/g, $M_{s/\rho}$ = 84 n$Tm^3$/g, $S_{N2}$ (spez. BET-Oberfläche) = 10,8 $m^2$/g.

## Beispiel 6

In einem 5 l-Rührgefäß wurde eine Lösung von 54,52 g $ZnCl_2$ unter Rühren und unter Einleiten von reinem Stickstoff (200 l/h) mit 647,8 ml einer technischen Eisen(II)-Chloridlösung der Konzentration 39,14 g $FeCl_2$/100 ml und mit 170,21 ml einer technischen Eisen(III)-Chloridlösung der Konzentration 57,18 g $FeCl_3$/100 ml vermischt. Die erhaltene Lösung wurde wie in Beispiel 1 beschrieben, weiterbehandelt. Die Reaktionszeit betrug etwa 4 Stunden.

Am erhaltenen isotropen zinkhaltigen Magnetit der Zusammensetzung $Zn_{0,4}Fe_{2,6}O_4$ wurden folgende Pigmenteigenschaften gemessen: $H_c$ = 8 kA/m, $M_{r/\rho}$ = 21 n$Tm^3$/g, $M_{s/\rho}$ = 99 n$Tm^3$/g, $S_{N2}$ (spez. BET-Oberfläche) = 28,9 $m^2$/g.

Das nach der anschließenden in Beispiel 1 beschriebenen tockenen Oxidation erhaltene zinkhaltige Eisen(III)-Oxid der Zusammensetzung $Zn_{0,4}Fe_{2,6}O_{4,3}$ wies folgende Pigmenteigenschaften auf: $H_c$ = 6 kA/m, $M_{r/\rho}$ = 20 n$Tm^3$/g, $M_{s/\rho}$ = 82 n$Tm^3$/g, $S_{N2}$ (spez. BET-Oberfläche) = 26,8 $m^2$/g.

### Beispiel 7

In einem 5 l-Rührgefäß wurde eine Lösung von 54,52 g $ZnCl_2$ unter Rühren und unter Einleiten von reinem Stickstoff (200 l/h) mit 518,22 ml einer technischen Eisen(II)-Chloridlösung der Konzentration 39,14 g $FeCl_2$/100 ml und mit 283,69 ml einer technischen Eisen(III)-Chloridlösung der Konzentration 57,18 g $FeCl_3$/100 ml vermischt. Die erhaltene Lösung wurde wie in Beispiel 1 beschrieben, weiterbehandelt. Die Reaktionszeit betrug etwa 3 Stunden.

Am erhaltenen isotropen zinkhaltigen Magnetit der Zusammensetzung $Zn_{0,4}Fe_{2,6}O_4$ wurden folgende Pigmenteigenschaften gemessen: $H_c$ = 3 kA/m, $H_{r/\rho}$ = 10 $nTm^3$/g, $M_{s/\rho}$ = 85 $nTm^3$/g, $S_{N2}$ (spez. BET-Oberfläche) = 49,1 $m^2$/g.

Das nach der anschließenden in Beispiel 1 beschriebenen trockenen Oxidation erhaltene zinkhaltige Eisen(III)-Oxid der Zusammensetzung $Zn_{0,4}Fe_{2,6}O_{4,3}$ wies folgende Pigmenteigenschaften auf: $H_c$ = 0 kA/m, $M_{r/\rho}$ = 6 $nTm^3$/g, $M_{s/\rho}$ = 66 $nTm^3$/g, $S_{N2}$ (spez. BET-Oberfläche) = 46,0 $m^2$/g.

### Beispiel 8

In einem 5 l-Rührgefäß wurde eine Lösung von 54,52 g $ZnCl_2$ unter Rühren und unter Einleiten von reinem Stickstoff (200 l/h) mit 194,33 ml einer technischen Eisen(II)-Chloridlösung der Konzentration 39,14 g $FeCl_2$/100 ml und mit 567,37 ml einer technischen Eisen(III)-Chloridlösung der Konzentration 57,18 g $FeCl_3$/100 ml vermischt. Die erhaltene Lösung wurde wie in Beispiel 4 beschrieben, weiterbehandelt.

Am erhaltenen isotropen zinkhaltigen Magnetit der Zusammensetzung $Zn_{0,4}Fe_{2,6}O_4$ wurden folgende Pigmenteigenschaften gemessen: $H_c$ = 0 kA/m, $M_{r/\rho}$ = 1 $nTm^3$/g, $M_{s/\rho}$ = 63 $nTm^3$/g, $S_{N2}$ (spez. BET-Oberfläche) = 80,8 $m^2$/g.

Das nach der anschließenden in Beispiel 1 beschriebenen trockenen Oxidation erhaltene zinkhaltige Eisen(III)-Oxid der Zusammensetzung $Zn_{0,4}Fe_{2,6}O_{4,3}$ wies folgende Pigmenteigenschaften auf: $H_c$ = 0 kA/m, $M_{r/\rho}$ = 0 $nTm^3$/g, $M_{s/\rho}$ = 54 $nTm^3$/g, $S_{N2}$ (spez. BET-Oberfläche) = 73,4 $m^2$/g.

## Patentansprüche

1. Verfahren zur Herstellung von feinteiligem Ferritpulver mit Spinellstruktur der allgemeinen Formel

$$M(II)_xFe(II)_{1-x}Fe(III)_2O_4$$

mit M = Mg, Mn, Co, Ni, Cu und/oder Zn und mit Werten für x von Null bis Eins, mit im wesentlichen isotroper Teilchenform, dadurch gekennzeichnet, daß ein sauerstoffhaltiges Gas in eine Mischfällung, hergestellt aus einer wäßrigen Alkalihydroxid-, einer M(II)-, einer Eisen(II)- und einer Eisen(III)-Salzlösung, eingeleitet wird, wobei das Verhältnis der Eisen(III)-Ionen zur Summe der M(II)- und Fe(II)-Ionen in der Mischfällung kleiner ist als im resultierenden Ferritpulver der Zusammensetzung $M_xFe_{3-x}O_4$.

2. Verfahren zur Herstellung von feinteiligem Ferritpulver mit Spinellstruktur der allgemeinen Formel $M(II)_xFe(III)_{3-x}O_{4,5-0,5x}$ mit M = Mg, Mn, Co, Ni, Cu und/oder Zn und mit Werten für x von Null bis Eins, mit im wesentlichen isotroper Teilchenform, dadurch gekennzeichnet, daß das gemäß Anspruch 1 hergestellte Ferritpulver der allgemeinen Formel $M_xFe_{3-x}O_4$ bei 100 - 500 °C mit einem sauerstoffhaltigen Gas trocken oxidiert wird.

3. Verfahren nach Anspruch 1, dadurch gekennzeichnet, daß das in die Mischfällung eingeleitete sauerstoffhaltige Gas Luft ist.

4. Verfahren nach Anspruch 2, dadurch gekennzeichnet, daß das zur trockenen Oxidation bei 100 - 500 °C verwendete sauerstoffhaltige Gas Luft ist.

5. Verwendung der gemäß Anspruch 1 bis 4 hergestellten isotropen Ferritpulver als Farbpigment in organischen Bindemitteln und in Kunststoffen.

6. Verwendung der gemäß Anspruch 1 bis 4 hergestellten isotropen Ferritpulver zur Herstellung von magnetischen Aufzeichnungsträgern.

7. Verwendung der gemäß Anspruch 1 bis 4 hergestellten isotropen Ferritpulver zur Herstellung von schwarzen oder farbigen magnetischen Flüssigkeiten und Tinten.

8. Verwendung der gemäß Anspruch 1 bis 4 hergestellten isotropen Ferritpulver zur Herstellung von Ferritkeramik und Plastoferriten.

## Claims

1. A process for the preparation of a finely divided ferrite powder which has the spinel structure, is of the formula

$$M(II)_xFe(II)_{1-x}Fe(III)_2O_4$$

where M is Mg, Mn, Co, Ni, Cu and/or Zn and x is from 0 to 1, and has an essentially isotropic particle shape, wherein an oxygen-containing gas is passed into a coprecipitate prepared from an aqueous alkali metal hydroxide solution, an M(II) salt solution, an iron(II) salt solution and an iron(III) salt solution, the ratio of the iron(III) ions to the sum of the M(II) and Fe(II) ions in the coprecipitate being smaller than that in the resulting ferrite powder of the composition $M_x = Fe_{3-x}O_4$.

2. A process for the preparation of a finely divided ferrite powder which has the spinel structure, is of the formula $M(II)_xFe(III)_{3-x}O_{4.5-0.5x}$, where M is Mg, Mn, Co, Ni, Cu and/or Zn and x is from 0 to 1, and has an essentially isotropic particle shape, wherein the ferrite powder prepared as described in Example 1 and of the formula $M_xFe_{3-x}O_4$ is oxidized in the dry state at 100-500°C with an oxygen-containing gas.

3. A process as claimed in claim 1, wherein the oxygen-containing gas passed into the coprecipitate is air.

4. A process as claimed in claim 2, wherein the oxygen-containing gas used for the oxidation in the dry state at 100-500°C is air.

5. Use of an isotropic ferrite powder prepared as claimed in any of claims 1 to 4 as a colored pigment in an organic binder or in a plastic.

6. Use of an isotropic ferrite powder prepared as claimed in any of claims 1 to 4 for manufacturing magnetic recording media.

7. Use of an isotropic ferrite powder prepared as claimed in any of claims 1 to 4 for manufacturing black or colored magnetic fluids and inks.

8. Use of an isotropic ferrite powder prepared as claimed in any of claims 1 to 4 for manufacturing ferrite ceramics and plastoferrites.

**Revendications**

1. Procédé de préparation de poudre finement divisée de ferrite à structure de spinelle de formule générale

$$M(II)_xFe(II)_{1-x}Fe(III)_2O_4$$

avec M = Mg, Mn, Co, Ni, Cu et/ou Zn et avec des valeurs de 0 à 1 pour x, présentant un forme de particules pratiquement isotrope, caractérisé en ce qu'un gaz contenant de l'oxygène est envoyé dans un coprécipité préparé à partir d'une solution aqueuse d'hydroxyde alcalin, d'un sel de M(II), d'un sel de fer(II) et d'un sel de fer(III), le rapport des ions de fer(III) à la somme des ions de M(II) et de Fe(II) dans le coprécipité étant plus faible que dans la poudre de ferrite résultante de composition $M_xFe_{3-x}O_4$.

2. Procédé de préparation de poudre finement divisée de ferrite à structure de spinelle de formule générale $M(II)_xFe(III)_{3-x}O_{4.5-0.5x}$ avec M = Mg, Mn, Co, Ni. Cu et/ou Zn et avec des valeurs de 0 à 1 pour x, présentant une forme de particules pratiquement isotrope, caractérisé en ce que la poudre de ferrite de formule générale $M_xFe_{3-x}O_4$ préparée selon la revendication 1 est oxydée à sec, à une température de 100 à 500°C, avec un gaz contenant de l'oxygène.

3. Procédé selon la revendication 1, caractérisé en ce que le gaz contenant de l'oxygène qui est envoyé dans le coprécipité est de l'air.

4. Procédé selon la revendication 2, caractérisé en ce que le gaz contenant de l'oxygène qui est utilisé pour l'oxydation à sec à une température de 100 à 500°C est de l'air.

5. Utilisation de la poudre de ferrite isotrope préparée selon l'une quelconque des revendications 1 à 4 comme pigment coloré dans des liants organiques et dans des matières plastiques.

6. Utilisation de la poudre de ferrite isotrope préparée selon l'une quelconque des revendications 1 à 4 pour la fabrication de supports d'enregistrement magnétiques.

7. Utilisation de la poudre de ferrite isotrope préparée selon l'une quelconque des revendications 1 à 4 pour la fabrication de liquides et d'encres magnétiques noirs ou colorés.

8. Utilisation de la poudre de ferrite isotrope préparée selon l'une quelconque des revendications 1 à 4 pour la fabrication de céramiques ferritiques et de plastoferrites.